(19) Europäisches Patentamt
European Patent Office
Office européen des brevets

(11) **EP 4 424 475 A1**

(12) **EUROPÄISCHE PATENTANMELDUNG**

(43) Veröffentlichungstag:
**04.09.2024   Patentblatt 2024/36**

(21) Anmeldenummer: **23159057.1**

(22) Anmeldetag: **28.02.2023**

(51) Internationale Patentklassifikation (IPC):
**B25J 9/16** [(2006.01)]      **G05B 19/418** [(2006.01)]

(52) Gemeinsame Patentklassifikation (CPC):
**B25J 9/1661;** B25J 9/1664; G05B 19/4182;
G05B 2219/36301; G05B 2219/40007

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder:
• **Moll, Christoph**
**81549 München (DE)**
• **Geipel, Markus Michael**
**80799 München (DE)**
• **Pol, Sebastian**
**90556 Seukendorf (DE)**
• **Thon, Ingo**
**85630 Grasbrunn (DE)**

(74) Vertreter: **Siemens Patent Attorneys**
**Postfach 22 16 34**
**80506 München (DE)**

(54) **VERFAHREN ZUR OPTIMALEN STEUERUNG EINES GERÄTES MITTELS MILP, COMPUTERPROGRAMM ZUR DURCHFÜHRUNG DES VERFAHRENS UND ENTSPRECHENDE VORRICHTUNG**

(57)    Die Erfindung betrifft die Optimierung einer Bewegungssteuerung eines Gerätes, wobei das Gerät dazu geeignet und eingerichtet sind, Objekte aufzunehmen und wieder abzustellen.

In der vorliegenden Lösung wird die Verwendung von Verfahren der Linear-Gemischt-Ganzzahlige -Optimierung (MILP) zur Zuordnung von Objekten zu Zielpositionen und von Transporten zu Kommissionierern vorgeschlagen.

FIG 4

**Beschreibung**

In Automatisierungsanlagen gibt es vielfältige Aufgaben, welche die Aufnahme und Bewegung von Objekten beinhalten. Fertigungsanlagen, darunter beispielsweise Verpackungsanlagen, in unterschiedlichsten Branchen der Industrieautomatisierung verwenden beispielsweise Förderbänder, auf denen sich Objekte, Produkte oder Teile von Produkten, in der Regel unsortiert oder unregelmäßig befinden. Beispiele finden sich in der Primär- und Sekundärverpackungsbranche, wie in der Nahrungs- und Genussmittelindustrie. Die Anzahl und die Anordnung der Produkte pro Förderfläche kann dabei stark variieren.

Unter einer Handhabungsmaschine, im Folgenden auch als Gerät bezeichnet, versteht man beispielsweise eine sogenannte Deltakinematik oder einen Roboter, der in der Automatisierung eingesetzt wird.

Für einen Verpackungsvorgang werden oftmals mehrere Handhabungsgeräte, wie Industrieroboter, auch Delta-Picker oder Knickarmroboter genannt, in Reihe verwendet, um ein "Pick and Place", also das Aufnehmen des Produkts vom Förderband und Neupositionieren durchzuführen.

Das beschriebene Vorgehen ist aber nicht auf diese Beispiele beschränkt. Zu weiteren Anwendungen gehören neben den Pick-and-Place-Operationen das Verpacken, beispielsweise das Palettieren von Produkten, und vieles mehr.

Beim Betrieb einer Reihe von im Wesentlichen gleichartigen Geräten, die alle die gleichen Aufgaben ausführen können, beispielsweise in Reihe aufgebaut an einem Förderband, besteht eine Herausforderung darin, zu entscheiden, welche Maschine die Aufgabe erfüllt. Eine Reihe von Pick-and-Place-Geräten sollen eine Box mit Produkten von einem Förderband füllen, dann muss unter anderem entschieden werden, welches Objekt von welchem Gerät kommissioniert (also aufgenommen, bewegt und an der richtigen Stelle abgelegt) wird. In den meisten Anordnungen dieser Art kann jedes Produkt von jeder der Geräte aufgenommen und verarbeitet (kommissioniert) werden, was zu einem hohen Maß an Flexibilität für die Bearbeitung der Aufgaben führt. Bei der Auswahl von Gerät und aufzunehmenden Objekten sind Regeln zu beachten, beispielsweise kann ein Gerät nicht zwei nebeneinanderliegende Objekte aufnehmen, bzw. keine Objekte auf eng nebeneinanderliegenden Positionen abstellen kann. Mehr Kommissionierer müssen die Kommissionierung untereinander verteilen.

Darüber hinaus werden jeweils eigene Kommissionierlinien für unterschiedliche Aufgaben eingerichtet, die unterschiedliche Optimierungskriterien erfordern. Zum Beispiel ist in einigen Anwendungsfällen die Hauptaufgabe, alle Objekte von dem Förderband rechtzeitig aufzunehmen (Beispiel: das Herausfiltern von Kunststoffgegenständen aus einem Müllstrom). In anderen Anwendungsfällen ist es dagegen wichtiger, dass eine Verpackungseinheit vollständig gefüllt wird (z. B. eine Pralinenschachtel), während es weniger problematisch ist, wenn einige Objekte am Ende des Förderbandes nicht kommissioniert wurden und herunterfallen. Ein weiteres, anspruchsvolles Szenario könnte sein, Joghurtbecher in Paletten so zu platzieren, so dass die Aromen innerhalb einer Palette gleichmäßig gemischt werden.

Zusätzlich zu diesem Kompromiss zwischen den Optimierungszielen besteht in der Regel das Problem, dass aktuelle Zuordnungsstrategien den Verschleiß der Geräte nicht berücksichtigen. Wenn die Arbeitsbelastung nicht gleichmäßig ist, dann verschleißen die Kommissionierer entsprechend unterschiedlich schnell, was zu häufigen und unregelmäßigen Wartungsintervallen, höheren Ausfallzeiten und letztendlich zu höheren Betriebskosten führt.

Die zu lösende Aufgabe wird im Folgenden beschrieben.

Während aktuelle Zuweisungsstrategien in den meisten Szenarien die oben beschriebene Kernaufgabe erfüllen können, berücksichtigen sie beispielsweise nicht die zuvor erwähnte Herausforderung des gleichmäßigen Verschleißes der Geräte. Dies liegt insbesondere daran, dass moderne Strategien keine Koordination zwischen den verschiedenen Geräten vorsehen. Stattdessen ist jedes Gerät mit einer individuellen Richtlinie ausgestattet, die entscheidet, welche Objekte in seiner Arbeitszone kommissioniert werden.

Bekannte Strategien sind unter anderen, immer das Objekt zu kommissionieren, das

- sich dem (Kommissionier- oder Greif-) Arm des Gerätes am nächsten befindet,
- am weitesten vorne auf dem Förderband liegt.
-

Diese individuellen Strategien führen jedoch zum nächsten Problem, dass die ersten Geräte einer Linie eine viel höhere Arbeitsbelastung aufweisen als diejenigen, die sich am Ende der Bearbeitungsstrecke befinden.

Die Druckschrift EP3456485A1 beschreibt das Optimieren eines automatisierten Vorganges zum Auswählen und Greifen eines Objektes durch einen Roboter. Die Grundidee besteht darin, jedem Objekt einen Prioritätskenner zuzuweisen, welcher von dem Roboter beim Auswählen und Greifen des Objekts berücksichtigt wird.

Es ist Aufgabe der Erfindung, ein gegenüber dem Stand der Technik verbessertes Verfahren anzugeben, insbesondere ein Verfahren, welches es dem Anwender erlaubt, verschiedene Optimierungskriterien gegeneinander abzuwägen. Es ist weiterhin Aufgabe der Erfindung, ein Computerprogramm und eine entsprechende Vorrichtung anzugeben.

Die Aufgabe wird gelöst durch ein Verfahren mit den Merkmalen des Patentanspruch 1.

Die Aufgabe wird weiterhin gelöst durch ein Computerprogramm gemäß Patentanspruch 15.

Die Aufgabe wird außerdem gelöst durch eine Vorrichtung, welche die Merkmale des Patentanspruchs 16 aufweist.

Weitere vorteilhafte Ausgestaltungen sind in den Unteransprüchen angegeben.

Das vorgeschlagene Verfahren wird zur Optimierung einer Bewegungssteuerung eines Gerätes verwendet, wobei das Gerät dazu geeignet und eingerichtet sind, Objekte aufzunehmen und wieder abzustellen.

Für jedes Objekt sind jeweils Informationen zu einer Startposition und Informationen über mögliche Zielpositionen bekannt, und die Start- und / oder Zielpositionen verändern über den Verlauf der Zeit ihre Position vorhersagbar. Weitere Randbedingungen werden berücksichtigt, siehe der Ausführungen weiter unten.

Die Berechnung einer Fahrkurve für das Gerät erfolgt, wobei die Fahrkurve mehrere Operationen beinhaltet, das Anfahren einer Startposition eines ersten Objekts und danach das Anfahren einer Zielposition des ersten Objekts, und eine Startposition und danach eine Zielposition eines weiteren Objekts bis zum Erreichen einer Endposition oder einer anderen Stoppbedingung, wobei die Fahrkurve zumindest ein Optimierungskriterium erfüllen muss. Die Bestimmung einer Zielposition für jedes Objekt aus der Menge der möglichen Zielpositionen und die Berechnung der daraus resultierenden Fahrkurve auf Basis der Start- und Zielpositionen erfolgt unter Verwendung des Verfahrens Linear-Gemischt-Ganzzahlige-Optimierung, oder MILP, mixed integer linear programming.

Die Endposition ist dabei erreicht, wenn das Gerät das Ende der Reichweite erreicht hat. Weitere Stoppbedingungen sind jedoch denkbar

Ein sinnvolle Endposition für ein leeres Gerät (Picker) ist beispielsweise der Mittelpunkt des Bandanfangs an dem die Objekte kommen, also die Stelle wo neue Objekte erwartet werden. Bei einem beladenen Picker (also mit einem aufgenommenen Objekt, welches zur Ablage vorgesehen ist) ist es die Mitte des Anfangs des Bandes mit den Zielpositionen, also die Stelle, wo neuen Ziele erwartet werden.

In der vorliegenden Lösung wird die Verwendung von Verfahren der Linear-Gemischt-Ganzzahlige-Optimierung (MILP) zur Zuordnung von Objekten zu Zielpositionen und von Transporten zu Kommissionierern vorgeschlagen.

Optimierung im mathematischen Sinne bedeutet die Bestimmung des Maximums oder Minimums einer reellwertigen Funktion über einem (beschränkten) Bereich oder Zustandsraum und des Arguments, für das die Funktion diesen Extremwert annimmt. Ein Spezialfall hiervon ist die Linear-Gemischt-Ganzzahlige Optimierung (MILP; engl. für mixed integer linear programming). Diese wird zunehmend auch in den Gebieten Logistik, Transport, Produktionsplanung, Finanzen, Kommunikation und Design eingesetzt, auch deshalb, weil sich mit ihrer Hilfe und insbesondere durch die Verwendung von Binärvariablen Probleme der kombinatorischen Optimierung wie das Rundreiseproblem (travelling salesman problem), Maschinenbelegungsprobleme, Reihenfolgeprobleme (sequencing problems), Transport- und Zuordnungsprobleme formulieren lassen.

Es gibt leistungsfähige Computerprogramme, Solver genannt, die solche mathematischen Probleme für MILP inzwischen schnell und in den meisten Fällen optimal lösen können.

Ein großer Vorteil dieser Technologie ist, dass damit unterschiedliche Bestandskonfigurationen modelliert werden können.

Ein weiterer Vorteil ist, dass die Modelle so formuliert werden können, dass nur Lösungen berechnet werden, die alle technischen Anforderungen erfüllen. Für die Auswahl unter den erlaubten Lösungen können sehr unterschiedliche Kriterien formuliert werden. Dies bietet viel Flexibilität bei der Modellierung bevorzugter Aufgaben.

Die Mathematische Modellierung des Problems erfolgt dabei vorteilhafterweise vorab offline. Dadurch hat man ausreichend Zeit, das vorliegende Aufgaben zu erfassen und zu definieren, diese Zeit fehlt dann nicht während der Produktivphase.

Formal betrachtet wird zunächst die vorliegende Ausgangssituation:

- Erkannte Objekte, die auf einem Transportmittel, beispielsweise einem Förderband liegen, und im Laufe des Transports ihre Position vorhersagbar verändern. Die Positionen der neu hinzukommenden Objekte sind dabei in der Regel ungeordnet und zunächst nicht vorhersagbar.

- Zielpositionen, die sich beispielsweise auf einem weiteren Förderband befinden, also über den Verlauf der Zeit ihre Position, ebenfalls vorhersagbar, verändern. Es kann sich dabei um einzelne Zielpositionen oder auch um Gruppen von Zielpositionen handeln.

- Eine Gruppe von Geräten, welche die Objekte aufnehmen (Pick-Operation) und auf den Zielpositionen ablegen (Place Operation) sollen. Diese Geräte werden im Stand der Technik einzeln gesteuert, und arbeiten unabhängig voneinander.

Ausgehend von den oben genannten Informationen wird daher gesucht:

- eine Zuordnung der Objekte zu Zielpositionen, sowie
- eine Abfolge von Transport-, Pick-and-Place-, und Leerlauf-Operationen der Geräte (auch Kommissionierung genannt) von Objekten zu Zielpositionen.

In der Praxis treten unterschiedliche Randbedingungen auf, welche in der Berechnung einer Bewegungssteuerung weiterhin vorteilhafterweise berücksichtigt werden können (diese Aufzählung ist beispielhaft und nicht abschließend):

- Die Art der Bewegung der Geräte wirkt sich auch auf den Verschleiß der Geräte auswirken. Dies gilt insbesondere auch für die Beschleunigung der Geräte in den verschiedenen Achsen.

- Die Aufnahme- und / oder Ablagevorgänge (Kommissioniervorgänge) können jeweils von beweglichen Transport- oder temporären Stoppbändern aus durchgeführt werden.
- Die Anordnung der Transportvorrichtungen können parallel (in die gleiche Richtung oder entgegengesetzt laufend) oder orthogonal zueinander angeordnet sein.
- Die Geräte können nur ein oder mehrere Objekte gleichzeitig aufnehmen.
- Die Zielpositionen können eines oder mehrere Objekte aufnehmen (beispielsweise Schächte für Stapel in einer Kekspackung) .
- Die Zielpositionen können sich in Gruppierungen befinden.

Auch hinsichtlich der logistischen Randbedingungen können unterschiedliche Anforderungen bestehen:

- Einschränkungen, welches Objekt in welcher Zielposition platziert wird, z. B. abhängig von der Form des Objekts und der Zielposition
- Bedingungen für Klassen von Objekten und Klassen von Zielpositionen, z. B. ein grünes Objekt in jedem Feld oder ein Objekt mit Erdbeergeschmack.

Das Gesamtmodell kann durch das beschriebene Vorgehen in mehrere Komponenten zerlegt werden. Dies ermöglicht es in vorteilhafter Weise, viele unterschiedliche Anwendungen durch eine überschaubare Menge parametrisierbarer Modellformulierungen abzubilden. Weiterhin können die Komponenten unabhängig voneinander online oder offline ausgeführt werden.

Im vorliegenden Beispiel zerfällt unser Modell:

a) in eine erste Struktur, in der die verschiedenen logistischen Anforderungen abgebildet werden (kombinatorisches Modell),
b) eine zweite Struktur, die die verschiedenen Bestandskonfigurationen und die physikalischen Eigenschaften der Transportvorrichtungen abbildet, sowie
c) eine Klasse von "Kopplungsbedingungen".

Zu a) Die erste (kombinatorische) Struktur beschreibt:

- zulässige Sequenzen von Pick-and-Place-Operationen (es kann nicht zwei Aufnahmevorgänge hintereinander geben).
- Randbedingungen bezüglich der Kommissionierung der Objekte (d. h. ob alle Gegenstände angehoben werden müssen)
- Randbedingungen zu den Zielpositionen (d. h. ob an jeder Zielposition ein - oder mehrere - Objekt platziert werden muss).

Im Modell werden beispielsweise 0-1 Variablen (Wert entweder 0 oder 1) () verwendet, zur Abbildung kombinatorischer Bedingungen. Andere Notationen sind denkbar.

Wenn das Gerät / die Geräte (Kommissionierer) jeweils abwechselnd eine Aufnahme- und eine Ablageaktion ausführen, genügt es, für jede mögliche Ladefahrt (mit einem Objekt zu einem Ziel) sowie für jede mögliche Leerfahrt (von der Startposition eines Kommissionierers oder einer Zielposition zu einem Objekt) eine Variable einzuführen.

In diesem Fall entsprechen zulässige Zuordnungen den Belegungen der (0-1) Variablen mit folgenden Bedingungen:

- An jeder Startposition eines Kommissionierers startet genau eine Leerfahrt.
- Genau eine Leerfahrt endet an jedem Objekt.
- An jedem Objekt beginnt genau eine Ladefahrt.
- Genau eine Ladefahrt endet an jeder Zielposition.
- An jeder Zielposition endet maximal eine Leerfahrt

Wenn eine 0-1 Belegung für die Variablen vorhanden ist, dann werden Folgen von Fahrten für das Gerät berechnet, indem von einer Startposition begonnen wird, von dort mit (genau) einer Lastfahrt zu einer Ablageposition, dann zu (genau) einer Aufnahmeposition oder am Ende zu einer Zielposition. Damit erhält das Gerät einen Pfad.

Eine Belegung der Variablen, die diesen Gleichungen genügt, definiert Pfade, die an den Startpositionen beginnen, zwischen Objekten und Zielpositionen alternieren und an einer Endposition enden.

Es wäre bei den Bedingungen ebenfalls zulässig, dass alle Kommissionierer direkt von Start zu Endpositionen fahren und jeweils eine Leer- und eine Lastfahrt von einem Objekt zu einem Ziel und eine Leerfahrt von dem Ziel dem Objekt zurück gewählt wird. Dass würde man als einen "Kreis" bezeichnen. In vielen mathematischen Modellen müssen diese "Kreise" explizit verboten werden. Im vorgeschlagenen Verfahren wird das nicht benötigt, weil die Kopplungsbedingung faktisch den Zeitpunkt von Aufnehmen und Absetzen koppelt, dieses macht Kreise unmöglich solange alle Fahrzeiten >0 sind!

Sollen auch Sequenzen betrachtet werden, in denen nicht alle Objekte kommissioniert und / oder nicht alle Ziele versorgt werden müssen, werden weitere (0-1) Variablen eingeführt und die Gleichungen erweitert, indem beispielsweise formuliert wird:

- An jeder Startposition eines Geräts / Kommissionierers startet genau eine Leerfahrt.
- Bei jedem Objekt endet genau eine Leerfahrt oder es wird nicht aufgenommen.
- An jedem Objekt beginnt genau eine Ladefahrt oder es wird nicht abgeholt.

- An jeder Zielposition endet genau eine Ladefahrt oder sie wird nicht bedient.
- An jeder Zielposition endet höchstens eine Leerfahrt oder sie wird nicht bedient.

Die Zuordnung der Geräte zu den einzelnen Objekten und Zielpositionen ergibt sich implizit aus der Abfolge der Schritte. Wenn zusätzlich eine Zuordnungsvariable explizit modelliert wird, können kontinuierliche [0,1] Variablen ((also Variablen, die einen beliebigen Wert zwischen 0 und 1 annehmen können) verwendet werden.

Diese Zuordungsvariablen beschreiben, welcher Kommissionierer welches Objekt/Ziel anfährt. Durch die Verwendung einer 0-1 Variable kann verhindert werden, dass zwei Kommissionierer jeweils ein Ziel halb anfahren.

In einer Ausführungsform kann man in diesem Fall auch [0,1] Variablen verwenden, da diese Variablen als Summe von [0,1]-Variablen immer ganzzahlig sind. Damit verkürzt man die Rechenzeiten.

Dann werden folgende Bedingungen verwendet:

- Die Startpositionen sind jeweils einem Gerät/Kommissionierer zugeordnet.
- Jedes Objekt und jede Zielposition wird von einem Gerät / Kommissionierer bedient.
- Wird eine Lastfahrt ausgewählt, so wird dem Ziel das gleiche Gerät/der gleiche Kommissionierer zugeordnet wie dem Objekt.
- Wird eine Leerfahrt ausgewählt, so wird dem Objekt das gleiche Gerät/der gleiche Kommissionierer zugeordnet wie der Zielposition, bei der die Leerfahrt startet.

Viele Einschränkungen in Bezug auf mögliche Zuweisungen können modelliert werden, indem die Menge der möglichen Reisen eingeschränkt wird. Andere Bedingungen, wie das Zählen von Objekten einzelner Klassen ("grünes Objekt", "eckiges Objekt", "Objekt mit Gewicht = 500g") in einzelnen Zielgruppen ("Box"), wird durch eine Erweiterung der Instanzbeschreibung und des Modells um Konzepte wie Objektklassen und Zielgruppen vorteilhaft ermöglicht.

Zu b) Das physikalische Modell verwendet kontinuierliche Variablen, um die Zeit und den Ort jeder Operation zu beschreiben. Ein Beispiel wäre hier ein Zeitpunkt und ein Punkt in einem lokalen Koordinatensystem des Kommissionierers. Faktisch ist ein Kommissioniervorgang ein Prozess, der eine gewisse Zeit in Anspruch nimmt, während der sich die Position des Objektes ändert. Der Übergang zwischen den einzelnen Phasen (Leerfahrt, Aufnahme des Objekts, Ladefahrt und Platzierungsvorgang auf dem Zielplatz) ist daher unscharf. In unserem Modell wird ein fester Zeitpunkt als Referenzpunkt für jede Operation verwendet. Hier kann vorteilhafterweise ein beliebiger Zeitpunkt eines an der Maschine klar definierten Vorgangs ausgewählt werden.

Es gibt nur einen Freiheitsgrad für die von dem Gerät auszuführende Operation, da sich die Objekte und Zielpositionen auf den Transportvorrichtungen auf einer (geraden) Linie am Kommissionierer mit einer bekannten Geschwindigkeit vorbei bewegen und der Zeitpunkt des Vorgangs die geometrischen Koordinaten eindeutig bestimmt.

Eine Realisierungsmöglichkeit besteht darin, für jeden Kommissionierer eine 0-Linie orthogonal zur Bandrichtung zu definieren und den Abstand der Position zu dieser Linie als "Offset"-Variable zu deklarieren. Dieser Versatz und die Position des Objekts oder die Zielposition auf dem Band implizieren dann den Zeitpunkt der Operation.

Die Einschränkungen des Aktionsbereichs des Pickers können als obere und untere Grenzen für diese Variablen ausgedrückt werden. Dazu wird das Segment der Geraden bestimmt, auf dem sich die Position bewegt, das im Einsatzbereich des Pickers liegt.

Wenn die beiden Förderbänder mit den Objekten und den Zielen parallel oder gegenläufig verlaufen, kann für beide Förderbänder eine gemeinsame 0-Linie definiert und zu einem orthogonalen Koordinatensystem des Kommissionierers verlängert werden. In diesem Koordinatensystem bewegen sich dann alle Objekte und Zielpositionen parallel zu einer Achse, so dass für jedes Objekt und jede Zielposition eine Koordinate konstant ist. Die andere Koordinate entspricht dem Versatz. Dies kann verwendet werden, um Reisezeiten zwischen zwei Punkten als Ungleichungsbedingungen zwischen den versetzten Variablen auszudrücken.

Generell gilt weiterhin:

- Bei Ladefahrten sind die Objekt- und Zielposition sowie die Zeiten der Arbeitsgänge so zu wählen, dass die Differenz zwischen dem Zeitpunkt des Platzeinsatzes und dem Zeitpunkt des Kommissioniervorgangs immer größer ist als die Dauer, die der Kommissionierer für die Durchführung der Ladefahrt benötigt.
- Die Bedingungen für Leerfahrten gelten sinngemäß.

Um die beiden Modelle zu koppeln, wird die folgende Implikation modelliert:

- Wenn eine Ladefahrt von einem Objekt zu einer Zielposition gewählt wird, dann muss die obige Bedingung erfüllt sein.

Alle hier genannten Bedingungen können direkt in MILP-Form (Mixed Integer Linear Programming) niedergeschrieben werden.

Für die letzte Gleichung haben wir eine BigM-Methode verwendet.

Eine BigM Fomulierung ist ein Standardverfahren um logische Bedingungen in MILPs zu formulieren.

Um für eine 0-1 Variable x und eine kontinuierlichen Variable y die folgende logische Bedingung auszudrücken(x = 0) => (y = 0)

kann man ein ausreichend großes M wählen und die folgende Ungleichung verwenden

$$y <= x * M , 0 <= y$$

(ist x =1, so ist y<=M keine Beschränkung, solange M ausreichend groß ist).

Dies wird verwendet, um Bedingungen zu formulieren, die nur dann gelten, wenn eine spezielle Fahrt gewählt wurde:

- Wenn eine Lastfahrt gewählt wird, dann muss der Zeitpunkt der Aufnahme des Objekts und der Zeitpunkt des Ablegens des Objekts am Ziel mindestens so weit auseinanderliegen, wie die Fahrt dauert.
- Wenn eine Leerfahrt gewählt wird, so muss der Zeitpunkt des vorherigen Ablegens und der Zeitpunkt der Aufnahme mindestens so weit auseinanderliegen, wie die Fahrt dauert.

Das Modell entsteht immer offline, die Berechnung erfolgt im Online Fall für durch die Kamera definierten Szenarien, dabei müssen Entscheidungen berücksichtigt werden, die schon an die Kommissionierer übermittelt wurden.

Um bestimmte Geräte mit diesem Modell anzusteuern, muss das Modell zyklisch gelöst und an die Steuerung übergeben werden, die dann die Fahrbefehle für die Geräte berechnet.

Vorteilhafte Ausführungsbeispiele sind in den Figuren wiedergegeben. Dabei zeigt

Figur 1 eine Schematische Übersicht mit Objekten und Zielpositionen,
Figur 2 die Situation von Figur 1, mit berechneten Transportbahnen,
Figur 3 Bewegung des Geräts in vertikaler Richtung über die Zeit unter Verwendung des physikalischen Modells und
Figur 4 eine Architekturübersicht.

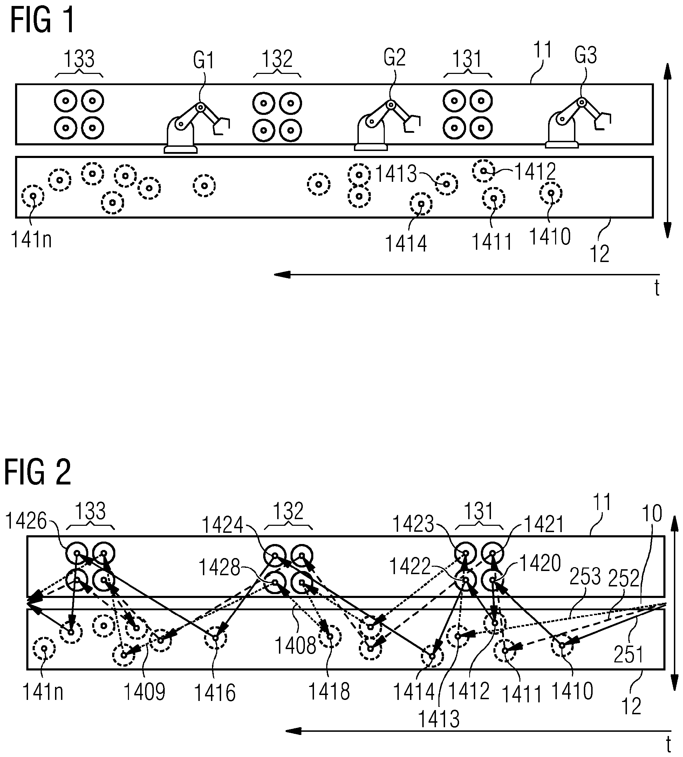

Figur 1, 2 und 3 zeigen jeweils eine Aufsicht auf ein Arrangement von zwei parallel angeordneten Förderbändern, welche gleiche Laufrichtung haben. Diese Anordnung wurde lediglich zur Veranschaulichung des Verfahrens gewählt, eine andere Anordnung der Laufbänder, beispielsweise orthogonal, wie oben beschrieben, ist möglich, aber in den Figuren nicht dargestellt.

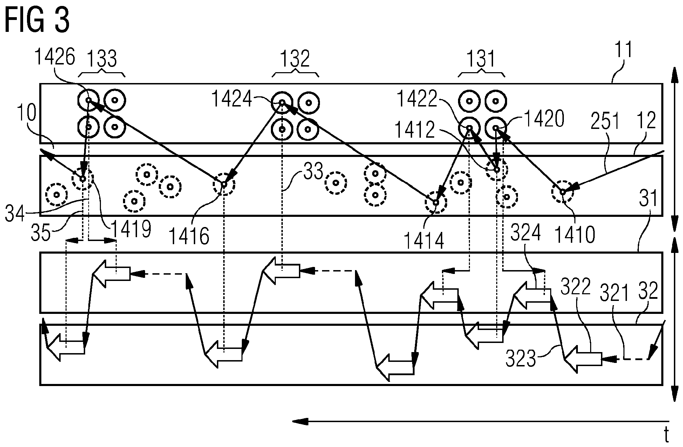

Die Geräte G1, G2 und G3 sind entlang des Förderbandes angeordnet. Die Figuren 2 und 3 beschreiben die Bewegungen der Geräte relativ zum Förderband.

Gleiche Bezugszeichen bezeichnen jeweils gleiche Gegenstände oder Positionen.

Auf dem unteren Förderband, 12, befinden sich jeweils die aufzunehmenden Objekte, 1410, 1411, ...141n und auf dem oberen Förderband 11, die Zielpositionen 1420, 1421, ..., 142n, zu denen die Objekte transportiert und dort abgelegt werden sollen. In dem dargestellten Beispiel handelt es sich dabei weiterhin um Gruppierungen von Zielpositionen, also beispielsweise eine Schachtel, einen Karton, eine Palette, einen Blister oder ähnliches, 131, 132, 133, zur Aufnahme von mehreren Objekten, was für die Bestimmung der Steuerung ggf. weitere Rahmenbedingungen vorgibt.

Die in Figur 1 dargestellten Informationen stellen die Startinformationen für das Verfahren dar: welche Startpositionen die einzelnen Objekte aufweisen, beispielsweise mit Koordinateninformationen (x, y) und welche Zielposition (x', y'). Die Geräte G1, G2, G3 sind an dem Transportband geeignet angeordnet, die Laufrichtung der Transportvorrichtungen ist mit dem Pfeil t dargestellt.

Figur 2 nun zeigt das Ergebnis einer Berechnung mit dem vorgeschlagenen Verfahren auf Basis der Daten aus Figur 1. Es ist jeweils die Zuordnung der jeweiligen Geräte G1, G2, G3 (nicht dargestellt) zu den Objekten und die Fahrspuren der drei Geräte, 251, 252 und 253. Das Objekt 1410 ist im dargestellten Beispiel der Zielposition 1420 zugewiesen. Dabei wird zunächst eine Leerfahrt von der Ausgangsposition zu dem Objekt 1410 geplant und durchgeführt, daran anschließend eine Aufnahme des Objekts 1410, dann eine Ladefahrt (mit dem Objekt 1410) zur ermittelten Zielposition 1420. In dem aufgezeichneten Beispiel werden alle Zielplätze am Ende mit Objekten belegt, was man daran sieht, dass bei jeder Zielposition eine der drei Fahrkurven 251, 252 oder 253 verzeichnet ist. Jedoch werden gegebenenfalls nicht alle Objekte (141n) von der ersten Transportvorrichtung aufgenommen und kommissioniert sein.

In Figur 3 sind in der oberen Hälfte der Darstellung die beiden Laufbänder 11, 12 mit den Objekten 1410, 1412, ... und den Zielpositionen 1420, 1422, ... dargestellt, analog zu Figur 1 und 2. Zur besseren Sichtbarkeit ist diesmal nur die Abfolge des Laufwegs 251 und der Operationen eines der Geräte dargestellt.

Die untere Hälfte der Graphik zeigt die (gleiche) Bewegung des Gerätes über den Laufbändern 31, 32 noch etwas detaillierter. Gezeigt wird insbesondere die Abweichung 34, 35 der Position von der 0 Position 1426 in vertikaler Richtung (zum Förderband) über die Zeit und stellt die einzelnen Aktionen des Gerätes dar: nach Start von der Zielposition ist zunächst "Warten" 321 auf das erste Objekt, dann eine Pick-Aktion 322, welche eine gewisse Zeit in Anspruch nimmt. Dabei muss die Aufnahmevorrichtung in der gleichen Geschwindigkeit wie die Transportvorrichtung bewegt werden. Als nächstes ist der Weg des Transportvorgangs 323, mit maximaler Geschwindigkeit, zum zweiten Laufband 31 dargestellt. Als nächster Vorgang erfolgt die Ablage des Objekts, 324, auch hier wird eine Zeit für den Ablagevorgang mit einkalkuliert. Der Versatz des Pfeils 324 zur Position 1420 entspricht der Offset-Variable. Die Aufnahme erfolgt "verfrüht" damit die Operation 1422 noch durch das gleiche Gerät durchgeführt werden kann. Die Operationen 1424 und 1416 werden exakt in dem Moment durchgeführt, in dem das Objekt/Ziel die 0-Linie des Gerätes durchläuft. Am Ende der Fahrt werden die Offsets wieder ausgenutzt.

Nach Abschluß des letzten Ablagevorgangs wird das Gerät / die Aufnahmevorrichtung wieder an die Startposition zurückgefahren.

Die großen Pfeile 322 zeigen Bewegungen an, die synchronisiert mit der jeweiligen Transportvorrichtung geschehen, um die Aufnahme oder Ablage eines Objekts zu ermöglichen.

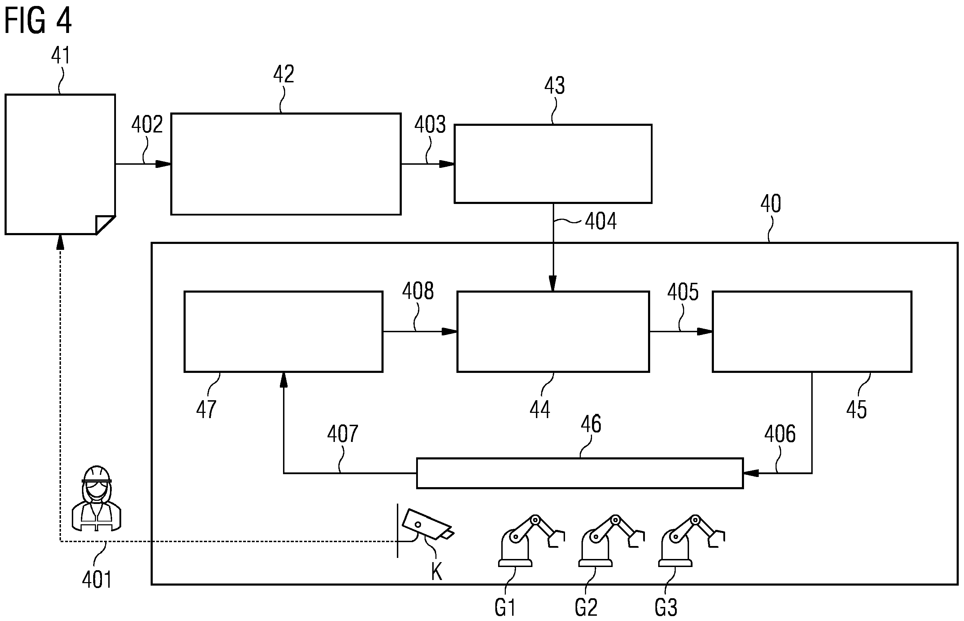

Figur 4 zeigt eine Architekturübersicht, wie bereits oben beschrieben. Ein Teil der Verfahrensschritte erfolgt Offline, vor Ablauf des Produktiv-Verfahrens, ein anderer Teil dann online, 40, also während des Produktivbetriebs der fraglichen Anlage. In der Vorbereitung ist eine Problemdefinition, 41 notwendig, dies wurde oben an dem vorliegenden Beispiel bereits exemplarisch erläutert. Aus den so erstellten Regeln und Gleichungen 402 wird ein instanzspezifisches Modell erstellt und parametriert, 42. Die so ermittelten Daten und Modelle werden zur Berechnung an ein MILP Modell (Mixed Integer Linear Programming) 43 überreicht, 403.

Die nun folgende Operationsschleife erfolgt "online" im Produktivbetrieb und verwendet einen problemspezifischen Optimierer, 44 Der Optimierer wird verwendet, um einen optimalen Plan für eine Verteilung von Artikeln und Zielpositionen auf den Bändern zu berechnen.

Die erhaltenen Daten 404 (und/oder 408 aus einer Regelschleife) werden dem MIP Solver übergeben, das Ergebnis durchläuft noch einen Nachbearbeitungsschritt (Postprocessing) 45, dabei werden die erkannten Objekte den zur Verfügung stehenden Geräten G1, G2, G3 zur Aufnahme zugewiesen. Begonnen wird mit einer Situation, in der ein Plan (für eine Fahrt) berechnet und an die Steuerung 46 übertragen wird, 406.

Auslöser für eine komplette Neuberechnung ist eine Aktualisierung der Informationen über Objekte und Zielpositionen auf dem Band, beispielsweise durch die Auswertung von Kamerabildern, k die einen Bereich der Bänder 11, 12 bzw. die Geräte G1, G2, G3 überwachen.

Wenn die aktuelle Instanz mit der letzten Instanz verglichen wird, sind einige Objekte verschwunden (aufgenommen, transportiert, verarbeitet) und einige neue Objekte wurden hinzugefügt (in dem beobachteten Kamerafeld). Die restlichen Objekte und Positionen wurden beim letzten Planungslauf bereits Geräten oder Kommissionierern zugeordnet. Außerdem wurden in der letzten Iteration die geplanten Zeitpunkte berechnet, zu denen die Vorgänge stattfinden sollen.

Im nächsten Schritt wird festgelegt, welcher Teil der Planung "eingefroren" (frozen) wird, 47. Dies gilt für alle Vorgänge, die in dem Zeitraum stattfinden, der erforderlich ist, um den Plan neu zu berechnen und in Fahranweisungen umzusetzen.

Dieser "eingefrorene" Teil der Lösung wird als feste Variablen im mathematischen Modell abgebildet. Mit diesen zusätzlichen Bedingungen 408 kann das im letzten Abschnitt beschriebene Modell dann unverändert für die inkrementelle Planung verwendet werden.

Ein großer Vorteil dieser Technologie ist, dass unterschiedliche Bestandskonfigurationen, auch einzeln und auch vorab (offline), modelliert werden können. Ein weiterer Vorteil ist, dass die Modelle so formuliert werden können, dass nur Lösungen berechnet werden, die alle gewünschten technischen Anforderungen erfüllen. Für die Auswahl unter den erlaubten Lösungen können dabei sehr unterschiedliche Kriterien formuliert werden. Dies bietet viel Flexibilität bei der Modellierung bevorzugter Aufgaben.

Der Optimierer entspricht einem mathematischen Modell und einer Reihe von Parametern, die den spezifischen Bestand (z. B. Anzahl der Kommissionierer, Einsatzbereich, Feederausrichtung, Höchstgeschwindigkeiten, maximale Beschleunigung, Dauer der Operationen) und die logistischen Regeln definieren. Der Bau dieses Modells ist ein technischer Schritt und kann Modellerweiterungen umfassen.

Bezugszeichenliste

| G1, G2, G3 | Gerät |
|---|---|
| T | Laufrichtung |
| 10 | Positionierung von Geräten |
| 11 | Transportmittel mit Zielpositionen |
| 12 | Transportmittel mit Startpositionen, Objekten |
| 131, 132, 133 | Gruppierungen von Zielpositionen |
| 1410,..141n | Objekt, Startposition |
| 1420,..142n | Objekt, Zielposition |
| 251, 252, 253 | Fahrkurve |
| 321 | Leerfahrt |
| 322 | Aufnahme Objekt an Startposition |
| 323 | Ladefahrt |
| 324 | Ablage Objekt an Zielposition |
| 40 | Online Operation Zyklus |
| 41 | Problem Definition |
| 42 | Generation Instanzspezifisches Modell und Parametrierung |
| 43 | MILP Modell |
| 44 | Solver (Diskreter Optimierer) |
| 45 | Nachbearbeitung (Postprocessing) |
| 46 | Steuerung |
| 47 | Vorbearbeitung (Preprocessing), Definition von eingefrorenen Daten |
| 406 | Zuordnung Geräte zu Objekten |
| 407 | Liste von Objekten |
| 402, 403, 404 | Zwischenergebnisse |

405, 408      Zwischenergebnisse

- maximale Aufnahmequote Objekte,
- Verschleiß der Geräte (G1, G2, G3).

**Patentansprüche**

1. Verfahren zur Optimierung einer Bewegungssteuerung eines Gerätes (G1, G2, G3), welches dazu geeignet und eingerichtet ist, Objekte aufzunehmen,

     - wobei für jedes Objekt Informationen zu einer Startposition (1410, 1411, ...) und Informationen über mögliche Zielpositionen (2420, 2421, ...) bekannt sind,
     - und die Start- und / oder Zielpositionen über den Verlauf der Zeit ihre Position vorhersagbar verändern, und
     - weitere Randbedingungen berücksichtigt werden, und
     - eine Berechnung einer Fahrkurve (251, 252, 253) für das Gerät (G1, G2, G3) erfolgt, wobei die Fahrkurve (251, 252, 253) folgende Operationen beinhaltet
     - eine Aufnahmeaktion mit Anfahren einer Startposition des Objekts und
     - eine Ablageaktion mit Anfahren einer Zielposition des Objekts, und
     eine Startposition eines weiteren Objekts und danach eine Zielposition des weiteren Objekts bis zum Erreichen einer Endposition oder Stoppbedingung,
     wobei die Fahrkurve zumindest ein Optimierungskriterium erfüllen muss
     **dadurch gekennzeichnet, dass**
     die Bestimmung einer Zielposition für jedes Objekt aus der Menge der möglichen Zielpositionen und die Berechnung der daraus resultierenden Fahrkurve auf Basis der Start- und Zielpositionen unter Verwendung des Verfahrens Linear-Gemischt-Ganzzahlige-Optimierung, oder MILP, mixed integer linear programming, erfolgt und
     Steuersignale für die Fahrkurve (251, 252, 253) des Geräts (G1, G2, G3) ausgegeben werden.

2. Verfahren gemäß Patentanspruch 1,
     **dadurch gekennzeichnet, dass**
     das Verfahren auf die gleichzeitige Optimierung der Fahrkurven (251, 252, 253) von zumindest zwei, parallel arbeitenden Geräten (G1, G2, G3) angewendet wird.

3. Verfahren gemäß Patentanspruch 1 oder 2,
     **dadurch gekennzeichnet, dass**
     die Optimierung der Fahrkurve (251, 252, 253) aufgrund zumindest eines der folgenden Parameter erfolgt:

     - minimale Zeit,

4. Verfahren gemäß einem der vorherigen Patentansprüche,
     **dadurch gekennzeichnet, dass**
     sich der Verschleiß des Geräts (G1, G2, G3) aus den in der ermittelten Fahrkurve (251, 252, 253) enthaltenen Bewegungswechseln und der zurückgelegten Strecke ergibt.

5. Verfahren gemäß einem der vorherigen Patentansprüche,
     **dadurch gekennzeichnet, dass**
     die Modellierung der Ausgangsparameter des Optimierungsverfahrens, insbesondere der Start- und Zielpositionen und dem Optimierungskriterium offline erfolgt.

6. Verfahren gemäß einem der vorherigen Patentansprüche,
     **dadurch gekennzeichnet, dass**
     die Berechnung der Fahrkurve (251, 252, 253) erfolgt Online, wobei Steuersignale berücksichtigt werden müssen, die bereits an das Gerät übermittelt wurden.

7. Verfahren gemäß einem der vorherigen Patentansprüche,
     **dadurch gekennzeichnet, dass**
     es sich bei den Randbedingungen um logistische Randbedingungen oder Randbedingungen der Geräte (G1, G2, G3) handelt.

8. Verfahren gemäß einem der vorherigen Patentansprüche,
     **dadurch gekennzeichnet, dass**
     eine Instanzbeschreibung mit Hilfe zumindest einer Zuordnungsvariable modelliert wird, insbesondere mittels einer kontinuierlichen [0,1] Variable oder einer 0-1 Variable, für die Startposition und die Zielposition und jedes Objekt.

9. Verfahren gemäß einem der vorherigen Patentansprüche,
     **dadurch gekennzeichnet, dass**
     die Instanzbeschreibung erweitert wird um eine Objektklasse zur genaueren Definition des Objekts.

10. Verfahren gemäß einem der vorherigen Patentansprüche,
     **dadurch gekennzeichnet, dass**
     die Instanzbeschreibung erweitert wird um Zielgruppen zur Gruppierung von Zielpositionen.

11. Verfahren gemäß einem der vorherigen Patentansprüche,
     **dadurch gekennzeichnet, dass**

die Fahrkurve (251, 252, 253) eine Zeitdauer berücksichtigt, welche durch die Ausführung der Steuersignale durch das Gerät in Anspruch genommen wurden, und

kontinuierliche [0,1] Variablen verwendet werden, um die Zeit und den Ort jeder Operation zu beschreiben, und ein fester Zeitpunkt als Referenzpunkt für jede Operation verwendet wird.

12. Verfahren gemäß einem der vorherigen Patentansprüche,
**dadurch gekennzeichnet, dass**
zu den berücksichtigten Operationen auch das Aufnehmen des Objekts (322) und das Ablegen des Objekts (324) gerechnet werden.

13. Verfahren gemäß einem der vorherigen Patentansprüche,
**dadurch gekennzeichnet, dass**
für jedes Gerät eine Sollposition auf der Fahrkurve definiert ist und der Abstand der Position (33, 34, 35) zu dieser Sollposition als "Offset"-Variable festgehalten wird.

14. Verfahren gemäß einem der vorherigen Patentansprüche,
**dadurch gekennzeichnet, dass**
zur Formulierung von Bedingungen die BigM-Methode verwendet wird.

15. Verfahren gemäß einem der vorherigen Patentansprüche,
**dadurch gekennzeichnet, dass**

eine Aktualisierung von Informationen über Startposition von Objekten und Zielpositionen auf dem Band eine Neuberechnung erfordern, und

dafür ein Teil der Planungsdaten eingefroren wird, (47), insbesondere für alle Vorgänge, die in dem Zeitraum stattfinden, der erforderlich ist, um die Neuberechnung durchzuführen und in Fahranweisungen umzusetzen.

16. Computerprogramm geeignet zur Durchführung der Schritte gemäß eines der Verfahren 1 bis 15

17. Vorrichtung (40) zur Optimierung einer Bewegungssteuerung (46) eines Gerätes (G1, G2, G3), welches dazu geeignet und eingerichtet ist, Objekte aufzunehmen,

- wobei für jedes Objekte Informationen zu einer Startposition (1410, 1411, ...) und Informationen über mögliche Zielpositionen (2420, 2421, ...) bekannt sind, die über den Verlauf der Zeit ihre Position vorhersagbar verändern, und
- weitere Randbedingungen, und

- die Vorrichtung eine Berechnung einer Fahrkurve (251, 252, 253) für das Gerät (G1, G2, G3) durchführt, wobei die Fahrkurve mehrere Operationen Anfahren von Start- und Zielposition, Aufnehmen und Ablegen, beinhaltet, bis zum Erreichen einer Endposition oder Stoppbedingung, wobei die Fahrkurve zumindest ein Optimierungskriterium erfüllen muss
**dadurch gekennzeichnet, dass**

die Vorrichtung (40) einen Solver (44) aufweist, zur Bestimmung einer Zielposition für jedes Objekt aus der Menge der möglichen Zielpositionen und der Berechnung der daraus resultierenden Fahrkurve (251, 252, 253) auf Basis der Start- und Zielpositionen unter Verwendung des Verfahrens Linear-Gemischt-Ganzzahlige-Optimierung, oder MILP, mixed integer linear programming.

18. Vorrichtung gemäß Patentanspruch 17,
**dadurch gekennzeichnet, dass**
die Optimierung die Fahrkurven (251, 252, 253) von zumindest zwei, parallel arbeitenden Geräten (G1, G2, G3) betrifft.

19. Vorrichtung (40) gemäß Patentanspruch 17 oder 18,
**dadurch gekennzeichnet, dass**
die Optimierung der Fahrkurve (251, 252, 253) aufgrund zumindest eines der folgenden Parameter erfolgt:

- minimale Zeit,
- maximale Aufnahmequote Objekte,
- Verschleiß der Geräte (G1, G2, G3).

20. Vorrichtung (40) gemäß einem der vorherigen Patentansprüche 17 bis 19,
**dadurch gekennzeichnet, dass**
sich der Verschleiß des Geräts (G1, G2, G3) aus den in der Fahrkurve (251, 252, 253) enthaltenen Bewegungswechseln und der zurückgelegten Strecke errechnet.

21. Vorrichtung (40) gemäß einem der vorherigen Patentansprüche 17 bis 20,
**dadurch gekennzeichnet, dass**

der Solver (44) eine vorab erfolgte Modellierung der Ausgangsparameter des Optimierungsverfahrens, insbesondere der Start- und Zielpositionen und dem Optimierungskriterium erhält, und die Berechnung der Fahrkurve (251, 252, 253) im laufenden Betrieb erfolgt.

22. Vorrichtung (40) gemäß einem der vorherigen Patentansprüche 17 bis 21,
**dadurch gekennzeichnet, dass**
es sich bei den Randbedingungen um logistische Randbedingungen oder Randbedingungen der Geräte (G1, G2, G3) handelt.

**23.** Vorrichtung (40) gemäß einem der vorherigen Patentansprüche 17 bis 22,
**dadurch gekennzeichnet, dass**
eine Instanzbeschreibung mit Hilfe zumindest einer Zuordnungsvariable modelliert wird, insbesondere mittels einer kontinuierlichen [0,1] Variablen oder einer 0-1 Variablen, für die Startposition und die Zielposition und jedes Objekt.

**24.** Vorrichtung (40) gemäß einem der vorherigen Patentansprüche 17 bis 23,
**dadurch gekennzeichnet, dass**
die Instanzbeschreibung um eine Objektklasse zur genaueren Definition des Objekts erweitert wird.

**25.** Vorrichtung (40) gemäß einem der vorherigen Patentansprüche 17 bis 24,
**dadurch gekennzeichnet, dass**
die Instanzbeschreibung erweitert wird um Zielgruppen zur Gruppierung von Zielpositionen.

**26.** Vorrichtung (40) gemäß einem der vorherigen Patentansprüche 17 bis 25,
**dadurch gekennzeichnet, dass**

ein Durchlaufen der Fahrkurve (251, 252, 253) eine Zeitdauer in Anspruch nimmt, und kontinuierliche [0,1] Variablen verwendet werden, um die Zeit und den Ort jeder Operation zu beschreiben, und ein fester Zeitpunkt als Referenzpunkt für jede Operation verwendet wird.

**27.** Vorrichtung (40) gemäß einem der vorherigen Patentansprüche 17 bis 26,
**dadurch gekennzeichnet, dass**
zu den berücksichtigten Operationen das Aufnehmen des Objekts und das Ablegen des Objekts gerechnet werden.

**28.** Vorrichtung (40) gemäß einem der vorherigen Patentansprüche 17 bis 27,
**dadurch gekennzeichnet, dass**
für jedes Gerät eine Sollposition auf der Fahrkurve definiert ist und der Abstand der Position (33, 34, 35) zu dieser Sollposition als "Offset"-Variable festgehalten wird.

**29.** Vorrichtung (40) gemäß einem der vorherigen Patentansprüche 17 bis 28,
**dadurch gekennzeichnet, dass**
der Solver (40) die Big-M-Methode verwendet.

**30.** Vorrichtung (40) gemäß einem der vorherigen Patentansprüche 17 bis 29,
**dadurch gekennzeichnet, dass**

eine Aktualisierung der Informationen über Objekte und Zielpositionen auf dem Band eine Neuberechnung erfordert, und dafür ein Teil der Planungsdaten eingefroren wird, (47), insbesondere für alle Vorgänge, die in dem Zeitraum stattfinden, der erforderlich ist, um die Neuberechnung durchzuführen und in Fahranweisungen umzusetzen.

FIG 1

FIG 2

# FIG 3

FIG 4

Europäisches Patentamt
European Patent Office
Office européen des brevets

# EUROPÄISCHER RECHERCHENBERICHT

Nummer der Anmeldung

**EP 23 15 9057**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FERRARI G ET AL: "Modeling and design of an optimal line manager of a packaging system with MILP", IECON 2015 – 41ST ANNUAL CONFERENCE OF THE IEEE INDUSTRIAL ELECTRONICS SOCIETY, IEEE, 9. November 2015 (2015-11-09), Seiten 5050-5056, XP032856059, DOI: 10.1109/IECON.2015.7392892 [gefunden am 2016-01-25] | 1-3, 5-19, 21-30 | INV. B25J9/16 ADD. G05B19/418 |
| Y | * das ganze Dokument * | 4,20 | |
| X | KOGO TAKUMA ET AL: "Fast MILP-based Task and Motion Planning for Pick-and-Place with Hard/Soft Constraints of Collision-Free Route", 2021 IEEE INTERNATIONAL CONFERENCE ON SYSTEMS, MAN, AND CYBERNETICS (SMC), IEEE, 17. Oktober 2021 (2021-10-17), Seiten 1020-1027, XP033998183, DOI: 10.1109/SMC52423.2021.9659097 [gefunden am 2021-12-21] | 1-3, 5-19, 21-30 | |
| Y | * das ganze Dokument * | 4,20 | **RECHERCHIERTE SACHGEBIETE (IPC)** |
| Y | GIORGIO BORT CARLOS MAXIMILIANO ET AL: "A model-based adaptive controller for chatter mitigation and productivity enhancement in CNC milling machines", ROBOTICS AND COMPUTER INTEGRATED MANUFACTURING, Bd. 40, 26. Januar 2016 (2016-01-26), Seiten 34-43, XP029457013, ISSN: 0736-5845, DOI: 10.1016/J.RCIM.2016.01.006 * 2.1. Optimal Control * | 4,20 | B25J G05B |

-/--

Der vorliegende Recherchenbericht wurde für alle Patentansprüche erstellt

| Recherchenort | Abschlußdatum der Recherche | Prüfer |
|---|---|---|
| **München** | **9. August 2023** | **Gardella, Simone** |

EPO FORM 1503 03.82 (P04C03)

**Seite 1 von 2**

Europäisches Patentamt
European Patent Office
Office européen des brevets

# EUROPÄISCHER RECHERCHENBERICHT

Nummer der Anmeldung

**EP 23 15 9057**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ANDRÉ CARVALHO BITTENCOURT ET AL: "Modeling and Identification of Wear in a Robot Joint under Temperature Uncertainties", SUBMISSION TO THE 18TH INTERNATIONAL FEDERATION OF AUTOMATIC CONTROL, IFAC 2011, [Online] 11. Oktober 2010 (2010-10-11), Seiten 10293-10299, XP055051511, DOI: 10.3182/20110828-6-IT-1002.01078 Gefunden im Internet: URL:http://liu.diva-portal.org/smash/get/diva2:650641/FULLTEXT01.pdf> * Abstract * * 5. A Model-Based Wear Estimator * ----- | 4,20 | |
| A | STOGL DENIS ET AL: "Tracking, reconstruction and grasping of unknown rotationally symmetrical objects from a conveyor belt", 2017 22ND IEEE INTERNATIONAL CONFERENCE ON EMERGING TECHNOLOGIES AND FACTORY AUTOMATION (ETFA), IEEE, 12. September 2017 (2017-09-12), Seiten 1-8, XP033292985, DOI: 10.1109/ETFA.2017.8247651 [gefunden am 2018-01-04] * III. Setup * * V. Robot Trajectory Generation, Control and Grasping * ----- | 11-13, 26-28 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| **München** | **9. August 2023** | **Gardella, Simone** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

**Seite 2 von 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3456485 A1